# EUROPEAN PATENT SPECIFICATION

(11) **EP 2 781 732 B1**
(45) Date of publication and mention of the grant of the patent: **06.04.2016**
(21) Application number: 13160147.8
(22) Date of filing: 20.03.2013
(51) Int. Cl.: F03B 13/20

(54) **Energy converting system**
Energieumwandlungssystem
Système de conversion d'énergie

(43) Date of publication of application: 24.09.2014
(73) Proprietor: Anderberg Development AB, 261 61 Landskrona (SE)
(72) Inventor: Anderberg, Göran, 261 61 Landskrona (SE)
(74) Representative: KIPA AB

(56) References cited:
- WO-A1-2006/079812
- WO-A1-2011/104294
- WO-A2-2010/076617
- US-A1- 2011 042 954

## Description

### Field of the Invention

This invention pertains in general to the field of energy converting systems. More particularly the invention relates to a power conversion system and a related method for converting wave energy to electric energy.

### Background of the Invention

Wave power plants for converting wave motion into electric energy utilize movable floats arranged on platforms to interact with the cyclic motion of the waves, and therefrom translate the motion to a generator. Besides from the apparent benefits the cyclic motion of the waves provides in this respect, such intermittent motion also poses problems in terms of uneven power extraction, which lowers efficiency, and further requires compensating means such as frequency converters for providing power delivery according to certain specifications. Previous wave power plants fails to provide efficient utilization of all the available wave energy and providing for an even power delivery. Lifetime of components such as hydraulic motors is also lowered due to the intermittent operation. Further, typical wave power plants are subsea plants, and plants utilizing buoys that are moving along wires extending from a platform to the seabed. Subsea plants are exposed to severe environmental conditions that cause significant wear of the equipment which shortens the lifetime.

US2011042954 discloses a floating platform having arms pivotally connected to floats and to the platform. The arms are connected to hydraulic cylinder and piston assemblies which in turn drives a generator. As mentioned above, such system is challenging in terms of obtaining even power extraction, due to lack of concern for compensating for the erratic nature of the motion induced by the waves.

WO2006/079812 discloses a buoy having arms pivotally attached to floats. The buoy contains a primary chamber in communication with a secondary chamber. The second chamber is pressure controlled and a turbine feed allows pressurized air out of the secondary chamber to drive turbines and generators. It is also disclosed a chamber with a rubber bladder being surrounded with inert gas to maintain a constant pressure within the bladder. Further, it is disclosed that in the even of a storm, the floats can be filled with water so that they sink to their lower limits, and fluid compressors are locked, i.e. there is no power extraction. The resume operation, the water is displaced from the floats using air from the primary chamber and the fluid compressors are released.

WO2010076617 discloses a wave power plant where the motor valve responds to a certain threshold force from the approaching wave. In more detail, the approaching wave exerts its buoyant force on the pod, pump piston moves to left, valve SV-2 remains closed until a prescribed pressure (generator load pressure) is reached. At this point valve SV-2 opens and the pressurized oil is supplied to the hydraulic motor.

A further problem with most of previous wave power plants is limited flexibility in geographic deployment to benefit from optimal wave conditions.

Another problem with prior art is limited efficiency due to lack of sufficient flexibility in adapting to varying wave conditions.

Another problem with previous wave power plants is lack of optimal stability when encountering severe weather conditions.

The above problems lead to challenges in using wave energy as an efficient source of energy, as the advantages are offset by the associated high initial costs that an inefficient wave power converting system is unable to compensate for.

Hence an improved power conversion system and related method would be advantageous, in particular for providing increased efficiency, deployment flexibility, weather stability, and lean power supply.

### Summary of the Invention

Accordingly, embodiments of the present invention preferably seek to mitigate, alleviate or eliminate one or more deficiencies, disadvantages or issues in the art, such as the above-identified, singly or in any combination by providing a system and method that prolongs the lifetime of an energy converting system, according to the appended patent claims.

According to a first aspect of the invention an energy converting system is provided comprising a semi-submersible platform, floats arranged to translate kinetic energy from wave propagation to arms being movably linked to said platform, and hydraulic cylinders adapted to receive said kinetic energy via said arms. The hydraulic cylinders are in communication with a hydraulic motor and a generator for power extraction. A first hydraulic cylinder is connected to a first float to transfer kinetic energy to said generator for said power extraction, and a control unit is adapted to control distribution of wave energy, whereby said control unit is operable to distribute an absorbed portion of said kinetic energy to at least one second hydraulic cylinder to therefrom actuate movement of at least one second float being connected to said second hydraulic cylinder, whereby movement of a plurality of first floats in an first direction is transferable to a plurality of second floats as a simultaneous movement in a second direction, opposite the first direction.

According to a second aspect of the invention a method of extracting power from waves in an energy converting system having floats that translate kinetic energy from wave propagation to a hydraulic motor is provided, said method comprises receiving an amount of kinetic energy from a first float that is transferred to an associated first hydraulic cylinder, and distributing a portion of said amount of kinetic energy via a hydraulic pressure from said first hydraulic cylinder to at least one second hydraulic cylinder that actuates movement of a second float, simultaneous and opposite to a movement of said first float, for momentaneous accumulation of potential energy.

Embodiments of the invention provides for power conversion in a wave power plant with high efficiency.

Embodiments of the invention provides for even power extraction over time in a wave power plant.

Embodiments of the invention provides for increased lifetime of a wave power plant.

Embodiments of the invention provides for increased flexibility in deploying wave power plants in different geographical locations.

Embodiments of the invention provides for increased flexibility in adapting to varying wave conditions for maintaining optimal power delivery targets.

Embodiments of the invention provides for increased stability of wave power plants in severe weather conditions.

Further embodiments of the invention are defined in the dependent claims, wherein features for the second and subsequent aspects of the invention are as for the first aspect mutatis mutandis.

It should be emphasized that the term "comprises/comprising" when used in this specification is taken to specify the presence of stated features, integers, steps or components but does not preclude the presence or addition of one or more other features, integers, steps, components or groups thereof.

### Brief Description of the Drawings

These and other aspects, features and advantages of which embodiments of the invention are capable of will be apparent and elucidated from the following description of embodiments of the present invention, reference being made to the accompanying drawings, in which
Fig. 1 is a schematic illustration of an energy converting system according to an embodiment of the present invention;
Fig. 2 is a schematic illustration of an energy converting system according to an embodiment of the present invention;
Fig. 3 is a schematic illustration of an energy converting system according to an embodiment of the present invention;
Fig. 4 is a schematic illustration of an energy converting system according to an embodiment of the present invention;
Fig. 5 is a flow chart of a method according to an embodiment of the present invention;
Fig. 6 is a schematic illustration of wave pattern in a scenario described in relation to an embodiment of the present invention; and
Fig. 7 is a schematic illustration of an energy diagram described in relation to an embodiment of the present invention.

### Description of embodiments

Specific embodiments of the invention will now be described with reference to the accompanying drawings. This invention may, however, be embodied in many different forms and should not be construed as limited to the embodiments set forth herein; rather, these embodiments are provided so that this disclosure will be thorough and complete, and will fully convey the scope of the invention to those skilled in the art. The terminology used in the detailed description of the embodiments illustrated in the accompanying drawings is not intended to be limiting of the invention. In the drawings, like numbers refer to like elements

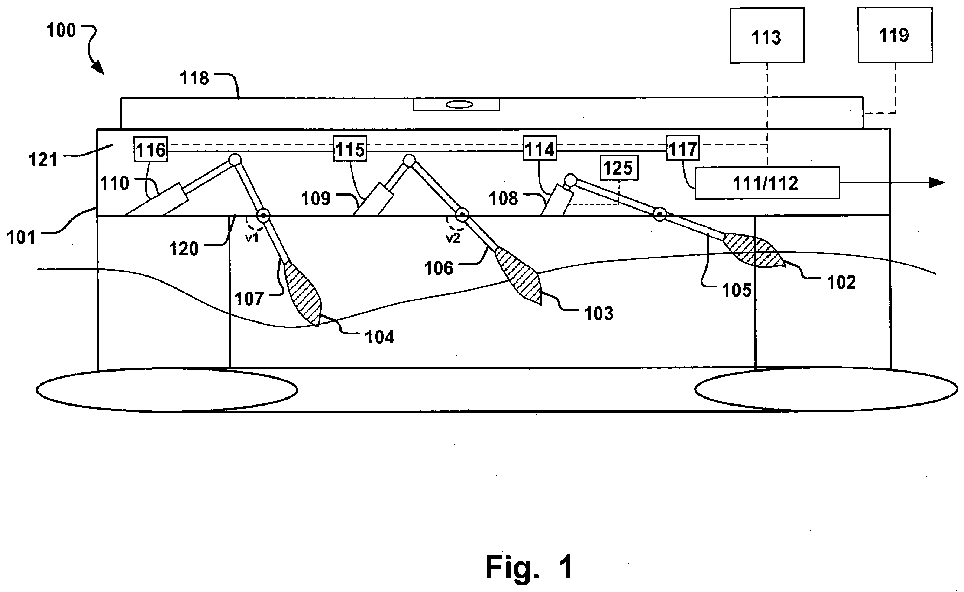

Fig. 1 shows a schematic of an energy converting system 100 comprising a semi-submersible platform 101, and floats 102, 103, 104, that are arranged at the platform 101 to translate kinetic energy from wave propagation to arms 105, 106, 107. The arms are movably linked to the platform 101, such as they may pivot in relation to the platform 101. Hydraulic cylinders 108, 109, 110, are adapted to receive the kinetic energy via the arms 105, 106, 107. A distal end of the arms may accordingly be movably attached to a distal end of the hydraulic cylinders so that the aforementioned distal ends may pivot in relation to each other, and transfer the motion, and correspondingly the kinetic energy, of the floats 102, 103, 104, and arms 105, 106, 107, to the respective hydraulic cylinders 108, 109, 110. The hydraulic cylinders are in communication with a hydraulic motor 111 and a generator 112 for power extraction from the energy converting system 101.

A first hydraulic cylinder 108 is connected to a first float 102 to transfer kinetic energy to the generator 112 for providing the power extraction, and the subsequent power delivery. Further, the energy converting system 101 comprises a control unit 113 that is adapted to control distribution of wave energy. The control unit 113 is thereby operable to distribute an absorbed portion of kinetic energy, i.e. a portion of the kinetic energy delivered by the first float 102, to at least one second hydraulic cylinder 109, 110. From this portion of absorbed kinetic energy, movement of at least one second float 103, 104, that is connected to the second hydraulic cylinder, can be actuated. Movement of a plurality of first floats 102 in a first direction, e.g. upwards towards the semi-submersible platform 101, is thereby transferable to a plurality of second floats 103, 104, as a simultaneous movement in a second direction, opposite the first direction, e.g. downwards from the semi-submersible platform 101.

Thus, a portion of the kinetic energy is transferred to the other (second) hydraulic cylinders 109, 110, and associated floats 103, 104, which is stored as potential energy. Hence, elastic potential energy may be momentarily stored by viewing the interaction between the floats and the water as a spring force provided by the increase of buoyancy when the second floats 103, 104, are lowered in the water. When the second floats 103, 104, subsequently "bounce back" by raising out of the water, the force is released as kinetic energy, that again can be absorbed by the hydraulic system. When a plurality of the aforementioned events take place, a corresponding plurality of portions of absorbed kinetic energy is released back to the hydraulic system to thereby contribute to even out momentary drops in hydraulic pressure in the system. Alternatively, or in addition, movement of at least one second float 103, 104, may be actuated to affect displacement of the semi-submersible platform, to thereby momentarily store potential energy, as described further below.

Hence, pressure and flow to the hydraulic motor 111 can be held constant without loosing peak energy as pressure gradients are evened out and absorbed as potential energy. Efficiency is increased as power extraction and delivery can be kept even. Momentary peak power gradients are accumulated as potential energy without being lost. Lifetime is preserved as intermittent or irregular operation of the motor 111 and associated components can be avoided. Frequency converters may also be dispensed with due to the more even power extraction. Further, the semi-submersible platform 101 can be stabilized, as the motion transferred to the second floats 103, 104, cause these floats to move deeper into the water, and the increased buoyance force acting on the floats 103, 104, creates a increased support for the platform 101 via arms 106, 107, due to an increased resistance for vertical movement of the platform 101 by the counteracting buoyancy force. A more sleek, lightweight, simple and more cost-efficient construction of the semi-submersible platform 101 can thus be employed, without compromising platform stability. Semi-submersible platforms 101 are advantageous over platforms fixed to the seabed in that they can be positioned where the most benedictional wave conditions are, at which locations it may be impossible to fixate the platform onto the seabed. Re-positioning is another advantage, and efficiency can be maintained in case wave and weather conditions vary.

The control unit 113 may accordingly be operable to distribute an absorbed portion of the kinetic energy to at least one second hydraulic cylinder 109, 110, to therefrom actuate movement of at least one second float 103, 104, to affect the displacement of the semi-submersible platform 101. By affecting the displacement of the semi-submersible platform 101, the above mentioned stabilization may be provided, e.g. a vertical downward displacement of the platform 101, can be compensated and prevented by second floats 103, 104, that move in a downward direction to support the platform 101 by the increased buoyance force as mentioned above. A synergetic effect from having a control unit 113 to distribute kinetic wave energy from first 102 to second floats 103, 104, is thereby provided in that the stabilization of the platform 101 uphold a more controlled manner by which the floats 103, 104, interact with the waves to absorb and release kinetic energy as described above. The semisubmersible platform provides the necessary counterweight in order for the floats 102, 103, 104, to displace the corresponding cylinders 108, 109, 110, with a sufficient amplitude to increase the hydraulic pressure of the hydraulic system.

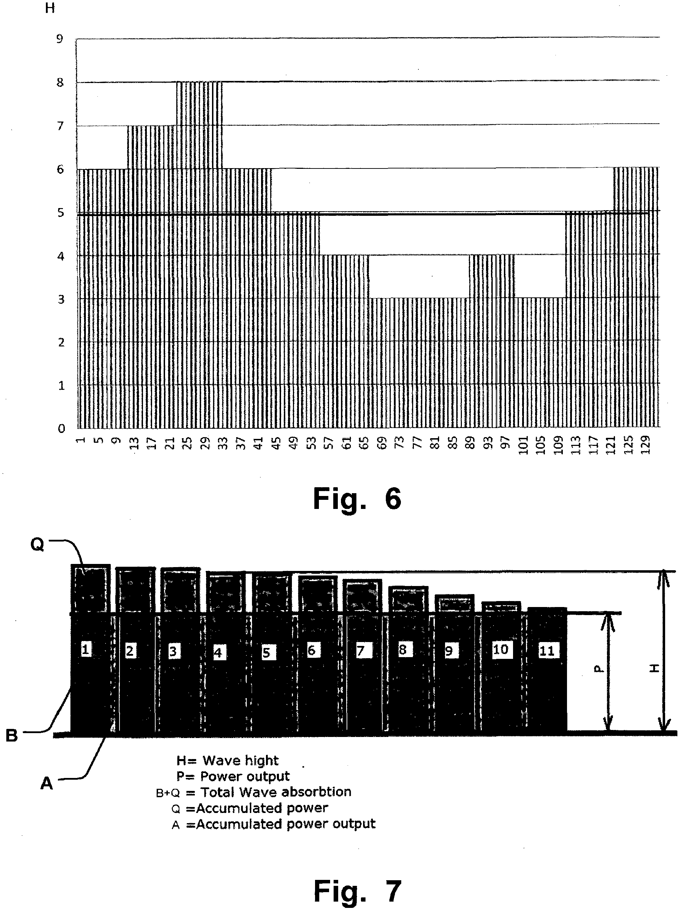

By affecting the displacement of the semi-submersible platform 101 by the transferred motion from a first 102 to second floats 103, 104, via control unit 113, potential energy may also be stored as the semi-submersible platform 101 may be displaced such that it is raised in the vertical direction when the second floats 103, 104, push deeper into the water. Subsequently, the potential energy is released when the semi-submersible platform 101 is lowered again, and kinetic energy is gained as the downward motion of the platform 101 will contribute to push the floats 102, 103, 104, in the upward vertical direction. This further prevents momentary dips in power delivery, as the raising of the platform 101 functions as creating a buffer of potential energy that is delivered, e.g. in a delayed manner, by again increasing the pressure in the hydraulic system, for example when the floats 102, 103, 104, experience a reduction in displacement by the waves. For example, it is conceivable that there is a period of a few minutes with incoming waves of a relatively large height followed by a period by incoming waves of a small height in comparison, see example of such scenario as illustrated in Fig. 6 showing the displacement of the floats (meter (m), y-axis) for incoming waves with a varying height of 3-8 meters, average 5 meters, passing under the platform 101, where each displacement or lift of the floats is illustrated on the x-axis. Hence, in this example, during a period approximately 2 minutes there will be approximately 12 waves passing under the platform 101 and each wave lifts a plurality of floats 102, 103, 104, such as eleven floats (further illustrated in Fig. 7), and there will accordingly be 132 lifts or displacements in total of the floats. The platform 101 may accumulate potential energy from the larger waves during a first period (such as during the 44 lifts where the average wave height is over 5 meters), by being pushed upwards by second floats 103, 104, as described above. When a period with lower waves follows the 2 min period, the potential energy gained by the platform 101 may contribute to the increase the pressure in the hydraulic system as the platform is lowered and move the floats 102, 103, 104. Hence, a further synergetic effect is provided by the inventive solution of the present disclosure, in that the semi-submersible platform 101 contributes to the accumulation of potential energy, and even power extraction, in addition to being stabilized by the floats 102, 103, 104.

It is further provided for a momentary gain in the work performed by each float 102, 103, 104, by "pre-positioning" e.g. the second floats 103, 104, at a maximum distance from their upper end positions by actuating the second floats with a portion of the kinetic energy received by the first float 102.

Further, simultaneous transfer of movement from a first to a second float may allow to dispense with the need for a dedicated absorber solution of hydraulic pressure, which provides for a less complex and less expensive construction, in addition to a more responsive energy converting system 100. I.e. by having a momentaneous and simultaneous redistribution of a portion of the kinetic wave energy among spatially separated floats 102, 103, 104, less delays will be present in the system 100, thus providing for greater compliance with variations and higher tolerances for compensating any irregularities. I.e more efficient compensation for momentary energy dips will be provided, as there is always a corresponding secondary float 103, 104, that for the moment does not absorb the full wave power, which momentarily absorb and release potential energy, e.g. via the principle of momentary increase in the buoyant force acting on the float and/or by raising and subsequently lowering the platform 101.

In more detail, as soon as first float is returning down from the upper position, when passing the wave crest, the second float - which has moved a distance into the water due to the transferred motion (resulting from the transferred- or re-distributed portion of kinetic energy), and thereby absorbed a portion of the kinetic energy as potential energy - may recoil to its former position under the influence of an increased buoyancy force acting on the float corresponding to the momentary increase in potential energy, and thereby release the potential energy as kinetic energy once recoiling occurs. Thus, the lowered momentary power delivery resulting from the first float returning from its maximum displacement by the passing wave, may be immediately compensated for by the release of absorbed kinetic energy from the second float 103, 104, and the pressure in the hydraulic system can be kept at a more constant level between the passing of the wave crests, and so can the power outtake. The aforementioned situation is achievable regardless if the second float is approached by a wave crest or not, and regardless of its momentary position in the wave cycle, as the aforementioned recoil and release of potential energy is independent of such position. The aforementioned scenario is illustrated in Fig. 7 showing the total wave energy absorption (B+Q) for a number of floats (i.e. eleven floats in this example), together with an indication of wave height (H), and power output (P). When he wave passes under the platform 101, the aforementioned eleven floats 1-11, such as a multiple of floats 102, 103, 104, will raise in sequence. The power outtake (P) for each float is taken at a threshold value as indicated in Fig. 7. Taking float no 1 as an example, corresponding to first float 102 discussed above, a portion (Q) (accumulated power) of the total kinetic energy conveyed by the first float 1 is distributed to a second float 103, 104, or a plurality of second floats 103, 104, which thereby are moved to absorb potential energy and subsequently exhibit a recoil to release the potential energy, i.e. accumulated power output (A) in Fig. 7, when the momentary power delivery from the first float has passed its peak value, as previously described above. The accumulated power output (A) thereby fills the gap in the power output when the first float has passed its peak value, and the total power output (P) is kept even.

Optionally, each float is connected to a sensor 125 that continuously detects the force by which each float is affected by the passing waves, to estimate the respective momentary positions in the current wave cycle. The transferred movement between first and second floats, by the distribution of the kinetic wave energy, or hydraulic pressure, by the control unit 113, may be dictated by such sensor information, and a larger portion of the absorbed kinetic energy may be relayed to second floats that are momentarily positioned in wave valleys (i.e. between the wave crests in the wave cycle), where there are less momentary force acting on the floats from the wave and hence are contributing less to the momentary power delivery. An additional effect by such sensor control is that the second float may be pre-positioned deeper into the water in the wave valleys, due to the transferred motion - or wave energy - before the second float is approached by a second wave crest, which can increase the subsequent recoil effect once the second float is forced in the upward vertical direction by the second wave, thereby increasing the speed of the second float in the upward direction once moving out of the water at the wave crest of the second wave. An increased amount of kinetic energy and movement may then be distributed to a third float, or back to the aforementioned first float, which immediately may absorb the energy and release it, once the second float passes the second wave crest, and cycle is repeated.

The control unit 113 may be connected to the hydraulic cylinders 108, 109, 110, via valves 114, 115, 116. The control unit 113 may be adapted to regulate a hydraulic cylinder pressure provided to or from the hydraulic cylinders 108-110, by being operable to control the valves 114-116. In such manner, the timing of the movement of the floats 102-104 in relation to the propagation of a wave can be controlled. It is thereby possible to optimize the timing of the float movement, e.g. such that the position can be set for absorbing the maximum amount of energy.

The control unit 113 may be adapted to delay an upward movement of the floats 102-104, caused by a propagating wave, by restricting hydraulic pressure through the valves 114-116 associated with each of the hydraulic cylinders 108-110. By delaying the movement upwards, the speed and force of the upward movement may be increased. Damping of the upward motion close to the upper end position is also possible for a more controlled and smooth operation.

The control unit 113 may be adapted to restrict the hydraulic pressure provided to the hydraulic motor 111 via an associated motor valve 117. Further, the control unit 113 may be adapted to distribute hydraulic pressure from a first hydraulic cylinder 114 to a second hydraulic cylinder 115, 116, for distributing a portion of the wave energy received by a first float 102 connected to the first cylinder 108, to a second hydraulic cylinder 115, 116, as potential energy. The potential energy can be subsequently delivered to fill out dips in power outtake as soon the hydraulic pressure from the first cylinder 114 is decreased described as described above in relation to Figs. 1, 6 and 7.

The control unit 113 may be programmable to set the ratio of the absorbed portion of kinetic energy as potential energy. A possible ratio may be a ration between 1/4 - 1/3 of the kinetic energy extracted from the waves. It is thereby possible to optimize the ratio to achieve a more even power delivery depending on varying conditions such as wave height and frequency of the incoming waves.

The control unit 113 may be adapted to substantially close the motor valve 117 to restrict fluid communication of the hydraulic pressure to substantially occur between each of the hydraulic cylinders 108-110, such that substantially all of the kinetic energy from wave propagation is distributed between the hydraulic cylinders 108-110 to actuate movement of the respectively connected floats 102, 103, 104. This allows for great stabilization during severe conditions such as storm conditions, as all of the floats 102-104 contribute to stabilize the platform 101. E.g. as a first float 102 is pressed upwards an immediate counter reaction is provided by second floats 103, 104, to compensate for the displacement in the platform 101.

The energy converting system may comprise a ballast 118 and a second control unit 119 that is adapted to control the amount of water in the ballast to thereby raise or lower the platform 101 for adjusting an angle v1, v2, of the floats 102-104 relative to the platform 101. This allows for optimization of the float movement depending on the current wave height, e.g. the platform 101 may be lowered during a small wave height such that the floats can move closer to their upper position for increased force and momentum transferred to the hydraulic cylinders 108-110. Optionally, or in addition, the platform 101 may be lowered or raised by varying the hydraulic pressure in the hydraulic system. Further, the stroke length of the hydraulic motor 111 may be varied depending on the current wave conditions. The control unit 113 may be adapted to determine the optimal combination of hydraulic pressure in the hydraulic system and the height of the platform relative the wave height to provide for an optimal stroke length of the hydraulic motor 111 for an efficient power extraction.

The floats may be pivotably arranged at a platform ceiling 120 that is raised above the water surface, i.e. beneath the platform 101 for vertical and horizontal movement of the floats 102-104. This allows for optimized absorption of energy from both vertical and horizontal components of the wave motion vector. Further, optimization of platform space is provided.

The floats 102-104 may comprise of a buoyant body being adapted to be displaced by a buoyancy force when lowered in water. The floats 102-104 may further comprise a wave surface facing the direction of wave propagation for receiving a force in the direction of wave propagation. There is accordingly a two-fold contribution to the energy conveyed by the floats 102-104, both from the buoyant force and from the motion vector of the incoming wave. This provides for an improved absorption of energy. The wave surface may be displaceable with an angle relative to a longitudinal extension of the arm 105, 106, 107, and relative the direction of wave propagation. This provides for that the angle can be optimized to absorb maximum amount energy from the propagation of the wave.

Each float may have a plurality of hydraulic cylinders 108-110 connected to it, such as one or two hydraulic cylinders per arm 105, 106, 107, to prove for an optimal delivery of hydraulic pressure in the hydraulic system of the energy converting system 100.

The energy converting system 100 may comprise a plurality of floats 102-104, and the control unit 113 may be adapted to distribute hydraulic pressure from a first plurality of hydraulic cylinders 114, 115, caused by receiving kinetic energy from a respectively connected float among a first plurality of floats 102, 103, in response to wave propagation, to a second plurality of hydraulic cylinders 115, 116, that each actuate movement of a respectively connected float among a second plurality of floats 103, 104, for accumulation of potential energy resulting from a collective movement of the platform 101 provided by the movement of the second plurality of floats 103, 104. There may accordingly be a distribution of a portion of kinetic energy amongst a plurality of communicating floats to, e.g. from a first plurality that are on the peak of power delivery to a second plurality that displace the platform 101 to thereby store potential energy.

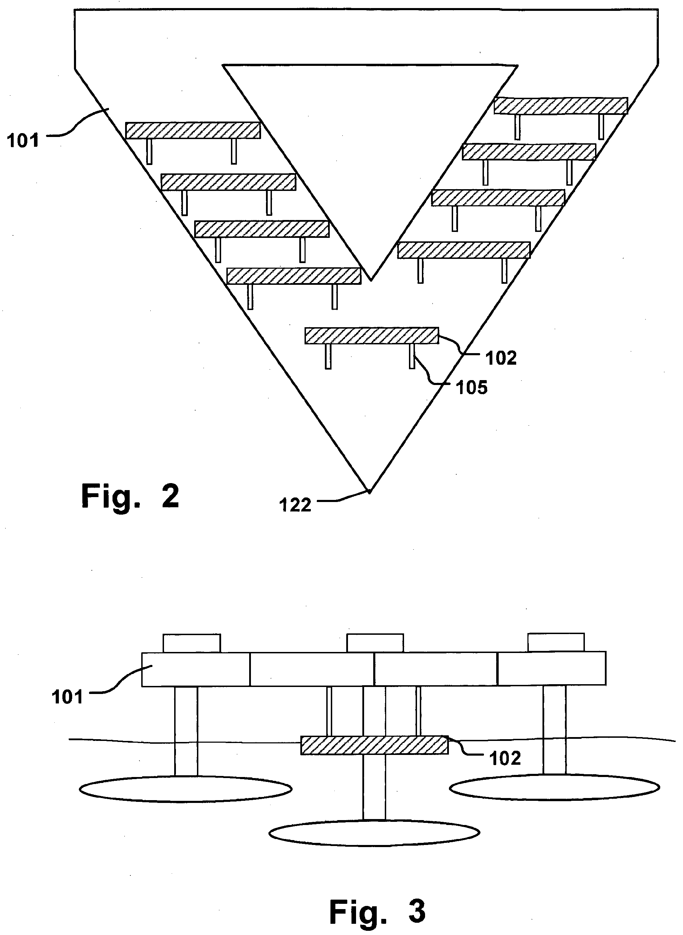

The platform 101 may comprise an enclosure 121 with a controlled environment for the energy converting system 100. It is thereby possible to protect any sensitive equipment against weather conditions. The semi-submersible platform 101 may comprise at least one bow-shaped portion 122, as illustrated in Fig. 2. The bow-shaped portion will allow for the platform 101 to align against the direction of wave propagation. The floats 102-104 may thereby be positioned optimally to absorb the energy from the waves. The platform 101 may have the general form of a triangular shape as illustrated in Fig. 2. This provides for a compact platform while being able to align against the waves. Fig. 3 illustrates a side view of the power conversion system 100.

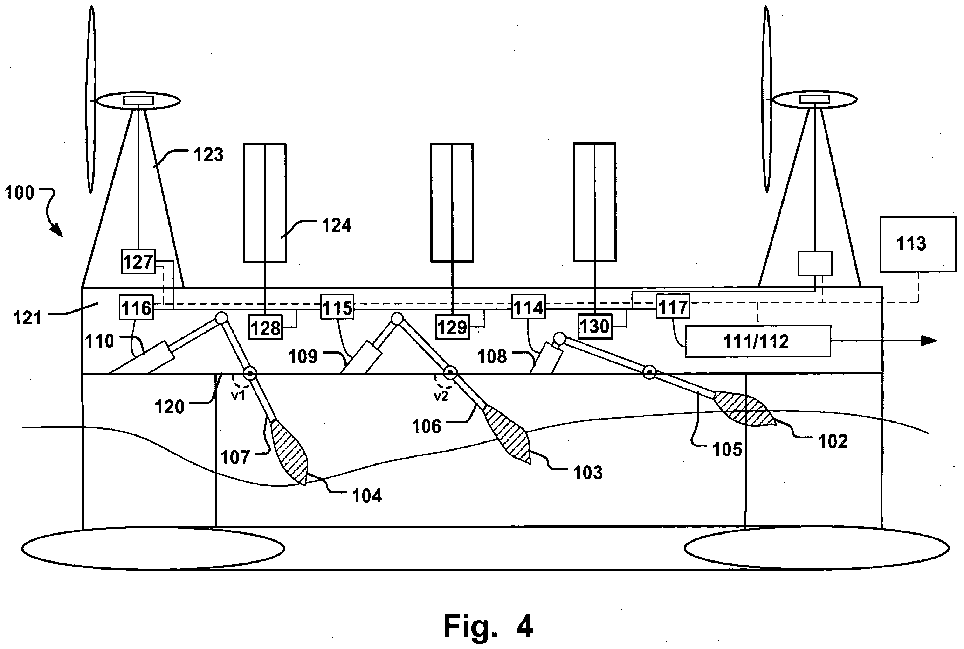

As illustrated in Fig. 4, the platform may comprise windmills 123, 124, being connected to the hydraulic motor 111. This contributes to the hydraulic power generation, and increased continuity of the hydraulic pressure in the system 100 and power takeoff. Valves 127, 128, 129, 130, connects the windmills 123, 124, to the hydraulic system of the energy conversion system 100. The valves 127, 128, 129, 130, are also connected to the control unit 113, that is adapted to control the power delivery, or hydraulic pressure contribution, from the windmills to the hydraulic motor 111 to provide a continuous and even power takeoff from the generator 112.

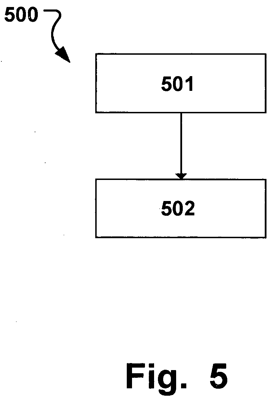

Fig. 5 illustrates a method 500 of extracting power from waves in an energy converting system 100 having floats 102-104 that translate kinetic energy from wave propagation to a hydraulic motor 111. The method 500 comprises receiving 501 an amount of kinetic energy from a first float 102 that is transferred to an associated first hydraulic cylinder 114. The method 500 further comprises the step of distributing 502 a portion of the amount of kinetic energy via a hydraulic pressure from the first hydraulic cylinder 114 to at least one second hydraulic cylinder 115 that actuates movement of a second float 103, simultaneous and opposite to a movement of the first float 102, for momentaneous accumulation of potential energy.

As will be appreciated by one of skill in the art, the present invention may be embodied as device, system, or method.

The present invention has been described above with reference to specific embodiments. However, other embodiments than the above described are equally possible within the scope of the invention. Different method steps than those described above, may be provided within the scope of the invention. The different features and steps of the invention may be combined in other combinations than those described. The scope of the invention is only limited by the appended patent claims.

## Claims

1. An energy converting system (100) comprising;
a semi-submersible platform (101),
floats (102, 103, 104) arranged to translate kinetic energy from wave propagation to arms (105, 106, 107) being movably linked to said platform,
hydraulic cylinders (108, 109, 110) adapted to receive said kinetic energy via said arms, said hydraulic cylinders being in communication with a hydraulic motor (111) and a generator (112) for power extraction,
wherein a first hydraulic cylinder(108) is connected to a first float (102) to transfer kinetic energy to said generator for said power extraction, **characterized by**;
a control unit (113) adapted to control distribution of wave energy, whereby said control unit is operable to distribute an absorbed portion of said kinetic energy to at least one second hydraulic cylinder (109, 110) to therefrom actuate movement of at least one second float (103, 104) being connected to said second hydraulic cylinder,
whereby movement of a plurality of first floats in an first direction is transferable to a plurality of second floats as a simultaneous movement in a second direction, opposite the first direction,
wherein said control unit is connected to said hydraulic cylinders via valves (114, 115, 116) and being adapted to regulate a hydraulic cylinder pressure provided to or from said hydraulic cylinders by being operable to control said valves, whereby timing of the movement of said floats in relation to said wave propagation is controllable.

2. Energy converting system according to claim 1,
wherein said control unit is operable to distribute an absorbed portion of said kinetic energy to at least one second hydraulic cylinder (109, 110) to therefrom actuate movement of at least one second float (103, 104) to affect displacement of said semi-submersible platform.

3. Energy converting system according to claim 1, wherein said control unit is adapted to delay an upward movement of said floats caused by said wave propagation by restricting hydraulic pressure through said valves associated with each of the hydraulic cylinders.

4. Energy converting system according to any of claims 1 - 3, wherein said control unit is adapted to restrict the hydraulic pressure provided to said hydraulic motor via an associated motor valve (117), and/or
wherein said control unit is adapted to distribute hydraulic pressure from said first hydraulic cylinder to said second hydraulic cylinder for said distribution of wave energy into potential energy.

5. Energy converting system according to any of claims 1 - 4, wherein said control unit is programmable to set the ratio of said absorbed portion of kinetic energy as potential energy.

6. Energy converting system according to claim 4, wherein said control unit is adapted to substantially close said motor valve to restrict fluid communication of said hydraulic pressure to substantially occur between each of said hydraulic cylinders such that substantially all of said kinetic energy from wave propagation is distributed between said hydraulic cylinders to actuate movement of said respectively connected floats.

7. Energy converting system according to any of claims 1 - 6, comprising a ballast (118) and a second control unit (119) adapted to control the amount of water in said ballast to thereby raise or lower said platform for adjusting an angle (v1, v2) of said floats relative to said platform.

8. Energy converting system according to any of claims 1 - 7, wherein said floats are pivotably arranged at a platform ceiling (120) being raised above the water surface beneath said platform for vertical and horizontal movement of said floats.

9. Energy converting system according to any of claims 1 - 8, wherein said floats comprise of a buoyant body being adapted to be displaced by a buoyancy force when lowered in water, said float further comprising a wave surface () facing the direction of wave propagation for receiving a force in said direction of wave propagation.

10. Energy converting system according to claim 9, wherein said wave surface is displaceable with an angle () relative to a longitudinal extension of said arm and relative the direction of wave propagation.

11. Energy converting system according to any of claims 1-10, comprising a plurality of floats, wherein said control unit is adapted to distribute hydraulic pressure from a first plurality of hydraulic cylinders, caused by receiving kinetic energy from a respectively connected float among a first plurality of floats in response to wave propagation, to a second plurality of hydraulic cylinders that each actuate movement of a respectively connected float among a second plurality of floats, for accumulation of potential energy resulting from a collective movement of said platform provided by said movement of said second plurality of floats.

12. Energy converting system according to any of claims 1-11, wherein said platform comprises an enclosure (121) with a controlled environment for said energy converting system.

13. Energy converting system according to any of claims 1-12, wherein said platform comprises at least one bow-shaped portion (122), and/or wherein said platform comprises windmills (123, 124) being connected to said hydraulic motor.

14. Method (500) of extracting power from waves in an energy converting system having floats that translate kinetic energy from wave propagation to a hydraulic motor, said method comprising;
receiving (501) an amount of kinetic energy from a first float that is transferred to an associated first hydraulic cylinder, **characterized by**;
distributing (502) a portion of said amount of kinetic energy via a hydraulic pressure from said first hydraulic cylinder to at least one second hydraulic cylinder that actuates movement of a second float, simultaneous and opposite to a movement of said first float, for momentaneous accumulation of potential energy,
regulating a hydraulic cylinder pressure provided to or from said hydraulic cylinders by controlling valves (114, 115, 116) with a control unit, whereby timing of the movement of said floats in relation to said wave propagation is controlled.

## Patentansprüche

1. Energieumwandlungs-System (100) umfassend;
Halbtaucher Plattform (101),
Schwimmer (102, 103, 104), die so angeordnet sind, dass sie kinetische Energie aus Wellenausbreitung an Arme (105, 106, 107) überführen, die beweglich mit der Plattform verbunden sind,
Hydraulikzylinder (108, 109, 110), die so angepasst sind, dass sie die kinetische Energie über die Arme empfangen können, wobei die Hydraulikzylinder zur Energiegewinnung in Kommunikation mit einem Hydraulikmotor (111) und einem Generator (112) stehen,
wobei ein erster Hydraulikzylinder (108) mit einem ersten Schwimmer (102) verbunden ist, um kinetische Energie zu dem Generator zum Zwecke der Energiegewinnung zu übertragen, **gekennzeichnet durch**;
Steuereinheit (113), die so angepasst ist, dass sie die Verteilung von Wellenenergie steuert, wodurch sich die Steuereinheit so betreiben lässt, dass sie eine absorbierte Menge kinetischer Energie an mindestens einen zweiten Hydraulikzylinder (109, 110) verteilt, um von dort aus eine Bewegung von mindestens einem zweiten Schwimmer (103, 104) auszulösen, der mit dem zweiten Hydraulikzylinder verbunden ist,
wodurch die Bewegung einer Vielzahl von ersten Schwimmern in eine erste Richtung sich übertragen lässt auf eine Vielzahl von zweiten Schwimmern als eine simultane Bewegung in eine zweite Richtung, welche der ersten Richtung entgegengesetzt ist,
wobei die Steuereinheit über Ventile (114, 115, 116) mit den Hydraulikzylindern verbunden und so angepasst ist, dass sie einen Hydraulikzylinderdruck reguliert, der zu den oder von den Hydraulikzylindern zugeführt wird, indem sie sich betreiben lässt, um die Ventile zu regulieren, wobei die Zeitgebung der Bewegung der Schwimmer sich in Bezug auf die Wellenausbreitung steuern lässt.

2. Energieumwandlungs-System gemäß Anspruch 1, wobei sich die Steuereinheit so betreiben lässt, dass sie einen absorbierten Teil kinetischer Energie an mindestens einen zweiten Hydraulikzylinder (109, 110) verteilt, um von dort aus eine Bewegung von mindestens einem zweiten Schwimmer (103, 104) auszulösen, um eine Verschiebung der Halbtaucher-Plattform zu bewirken.

3. Energieumwandlungs-System gemäß Anspruch 1, wobei die Steuereinheit so angepasst ist, dass sie eine Aufwärtsbewegung der Schwimmer, welche durch die Wellenausbreitung verursacht wird, verzögert, indem sie den Hydraulikdruck durch die Ventile einschränkt, die zu jedem der Hydraulikzylinder gehören.

4. Energieumwandlungs-System gemäß einem beliebigen der Ansprüche 1 - 3, wobei die Steuereinheit so angepasst sind, dass sie den Hydraulikdruck einschränkt, welcher dem Hydraulikmotor über ein dazugehöriges Motorventil (117) zugeführt wird, und/oder
wobei die Steuereinheit so angepasst sind, dass sie den Hydraulikdruck von einem ersten Hydraulikzylinder zum zweiten Hydraulikzylinder zum Zwecke der Verteilung der Wellenenergie in potentielle Energie verteilt.

5. Energieumwandlungs-System gemäß einem beliebigen der Ansprüche 1 - 4, wobei die Steuereinheit sich so programmieren lässt, dass sie das Verhältnis des absorbierten Teiles kinetischer Energie als potentielle Energie einstellt.

6. Energieumwandlungs-System gemäß Anspruch 4, wobei die Steuereinheit so angepasst sind, dass sie das Motorventil im Wesentlichen schließt, um die Fluidkommunikation des Hydraulikdrucks, der im Wesentlichen zwischen jedem der Hydraulikzylinder stattfindet, einzuschränken, so dass im Wesentlichen die gesamte kinetische Energie aus Wellenausbreitung zwischen den Hydraulikzylindern verteilt wird, um Bewegungen der jeweils verbundenen Schwimmer auszulösen.

7. Energieumwandlungs-System gemäß einem beliebigen der Ansprüche 1 - 6, einen Ballast (118) und eine zweite Steuereinheit (119) umfassend, die so angepasst ist, dass sie die Wassermenge in dem Ballast steuert, um dadurch die Plattform zu heben oder zu senken, so dass einen Winkel (v1, v2) der Schwimmer in Relation zu der Plattform angepasst wird.

8. Energieumwandlungs-System gemäß einem beliebigen der Ansprüche 1 - 7, wobei die Schwimmer schwenkbar an der Plattformdecke (120) angeordnet sind, die zum Zwecke der vertikalen und horizontalen Bewegung der Schwimmer unterhalb der Plattform über die Wasseroberfläche gehoben wird.

9. Energieumwandlungs-System gemäß einem beliebigen der Ansprüche 1 - 8, wobei die Schwimmer einen Bojenkörper umfassen, der so angepasst ist, dass er von einer Auftriebskraft verschoben wird, wenn er im Wasser herabgesenkt wird, wobei der Schwimmer ferner eine Wellenoberfläche () umfasst, die in Richtung der Wellenausbreitung ausgerichtet ist, so dass sie eine Kraft in dieser Richtung der Wellenausbreitung empfangen kann.

10. Energieumwandlungs-System gemäß Anspruch 9, wobei die Wellenoberfläche mit einem Winkel () in Relation zur Längserstreckung des Arms und in Relation zu der Richtung der Wellenausbreitung verschiebbar ist.

11. Energieumwandlungs-System gemäß einem beliebigen der Ansprüche 1 - 10, eine Vielzahl von Schwimmern umfassend, wobei die Steuereinheit so angepasst ist, dass sie Hydraulikdruck von einer ersten Vielzahl von Hydraulikzylindern, der durch den Empfang von kinetischer Energie von einem entsprechend verbundenen Schwimmer unter einer ersten Vielzahl von Schwimmern als Antwort auf Wellenausbreitung entsteht, an eine zweiten Vielzahl von Hydraulikzylindern, von denen jeder eine Bewegung eines entsprechend verbundenen Schwimmers unter einer zweiten Vielzahl von Schwimmern auslöst, zur Akkumulation von potentieller Energie verteilt, die aus einer kollektiven Bewegung der Plattform resultiert, welche von der Bewegung der zweiten Vielzahl von Schwimmern bereitgestellt wird.

12. Energieumwandlungs-System gemäß einem beliebigen der Ansprüche 1 - 11, wobei die Plattform eine Einhausung (121) mit einer kontrollierten Umgebung für das Energieumwandlungs-System umfasst.

13. Energieumwandlungs-System gemäß einem beliebigen der Ansprüche 1 - 12, wobei die Plattform mindestens einen bogenförmigen Abschnitt (122) umfasst, und/oder wobei die Plattform Windräder (123, 124) umfasst, die mit dem Hydraulikmotor verbunden sind.

14. Verfahren (500) zur Gewinnung von Strom aus Wellen in einem Energieumwandlungs-System, das Schwimmer umfasst, welche kinetische Energie aus Wellenausbreitung zu einem Hydraulikmotor überführen, wobei das Verfahren umfasst;
Empfang (501) einer Menge kinetischer Energie von einem ersten Schwimmer, die an einen dazugehörigen ersten Hydraulikzylinder übertragen wird, **gekennzeichnet durch**;
Verteilung (502) eines Teils dieser Menge kinetischer Energie über einen Hydraulikdruck von dem ersten Hydraulikzylinder an mindestens einen zweiten Hydraulikzylinder, der die Bewegung eines zweiten Schwimmers auslöst, welche simultan und entgegengesetzt zu einer Bewegung des ersten Schwimmers ist, zum Zwecke der momentanen Akkumulation von potentieller Energie,
Regulierung eines Hydraulikzylinderdrucks, der zu den oder von den Hydraulikzylindern **durch** die Steuerung der Ventile (114, 115, 116) mit einer Steuereinheit zugeführt wird, wodurch die Zeitgebung der Bewegung der Schwimmer in Relation zu der Wellenausbreitung gesteuert wird.

## Revendications

1. Système de conversion d'énergie (100) comprenant,
une plate-forme semi-submersible (101),
des flotteurs (102, 103, 104) disposés pour transmettre une énergie cinétique provenant de la propagation des vagues à des bras (105, 106, 107) qui sont reliés de façon mobile à ladite plate-forme,
des vérins hydrauliques (108, 109, 110) destinés à recevoir ladite énergie cinétique par le biais desdits bras, lesdits vérins hydrauliques étant en communication avec un moteur hydraulique (111) et un générateur (112) pour une extraction de puissance,
dans lequel un premier vérin hydraulique (108) est connecté à un premier flotteur (102) pour transférer l'énergie cinétique audit générateur pour ladite extraction de puissance, **caractérisé par**,
une unité de commande (113) destinée à commander une distribution de l'énergie des vagues, grâce à quoi ladite unité de commande peut être mise en oeuvre pour distribuer une partie absorbée de ladite énergie cinétique à au moins un deuxième vérin hydraulique (109, 110) pour actionner à partir de celui-ci un mouvement d'au moins un deuxième flotteur (103, 104) qui est connecté audit deuxième vérin hydraulique,
grâce à quoi un mouvement d'une pluralité de premiers flotteur dans une première direction peut être transféré à une pluralité de deuxièmes flotteur sous la forme d'un mouvement simultané dans une deuxième direction, opposée à la première direction,
dans lequel ladite unité de commande est connectée auxdits vérins hydrauliques par le biais de vannes (114, 115, 116) et étant destinée à réguler une pression de vérin hydraulique fournie vers ou depuis lesdits vérins hydrauliques en pouvant être mise en oeuvre pour commander lesdites vannes, grâce à quoi une synchronisation du mouvement desdits flotteurs par rapport à ladite propagation des vagues est contrôlable.

2. Système de conversion d'énergie selon la revendication 1, dans lequel ladite unité de commande peut être mise en oeuvre pour distribuer une partie absorbée de ladite énergie cinétique vers au moins un deuxième vérin hydraulique (109, 110) pour actionner à partir de celui-ci un mouvement d'au moins un deuxième flotteur (103, 104) pour affecter un déplacement de ladite plate-forme semi-submersible.

3. Système de conversion d'énergie selon la revendication 1, dans lequel ladite unité de commande est destinée à retarder un mouvement vers le haut desdits flotteurs provoqué par ladite propagation des vagues en limitant la pression hydraulique à travers lesdites vannes associées à chacun des vérins hydrauliques.

4. Système de conversion d'énergie selon l'une quelconque des revendications 1 à 3, dans lequel ladite unité de commande est destinée à limiter la pression hydraulique fournie audit moteur hydraulique par le biais d'une vanne de moteur associée (117), et/ou
dans lequel ladite unité de commande est destinée à distribuer la pression hydraulique à partir dudit premier vérin hydraulique vers ledit deuxième vérin hydraulique pour ladite distribution d'énergie des vagues en une énergie potentielle.

5. Système de conversion d'énergie selon l'une quelconque des revendications 1 à 4, dans lequel ladite unité de commande peut être programmée pour déterminer le taux de ladite partie absorbée de l'énergie cinétique comme énergie potentielle.

6. Système de conversion d'énergie selon la revendication 4, dans lequel ladite unité de commande est destinée à fermer globalement ladite vanne de moteur pour limiter une communication de fluide de ladite pression hydraulique devant globalement se produire entre chacun desdits vérins hydrauliques de sorte que globalement la totalité de ladite énergie cinétique provenant de la propagation des vagues soit distribuée entre lesdits vérins hydrauliques pour actionner un mouvement desdits flotteurs connectés respectivement.

7. Système de conversion d'énergie selon l'une quelconque des revendications 1 à 6, comprenant un ballast (118) et une deuxième unité de commande (119) destinée à commander la quantité d'eau dans ledit ballast pour de cette manière relever ou abaisser ladite plate-forme pour ajuster un angle (v1, v2) desdits flotteurs par rapport à ladite plate-forme.

8. Système de conversion d'énergie selon l'une quelconque des revendications 1 à 7, dans lequel lesdits flotteurs sont disposés avec possibilité de pivotement au niveau d'un plafond de plate-forme (120) qui est relevé au-dessus de la surface de l'eau en dessous de ladite plate-forme pour un mouvement vertical et horizontal desdits flotteurs.

9. Système de conversion d'énergie selon l'une quelconque des revendications 1 à 8, dans lequel lesdits flotteurs comprennent un corps flottant qui est destiné à être déplacé par une force de flottaison lorsqu'il est abaissé dans l'eau, ledit flotteur comprenant en outre une surface à vagues () orientée dans la direction de propagation des vagues destinée à recevoir une force dans ladite direction de propagation des vagues.

10. Système de conversion d'énergie selon la revendication 9, dans lequel ladite surface à vagues est déplaçable avec un angle () par rapport à une extension longitudinale dudit bras et par rapport à la direction de propagation des vagues.

11. Système de conversion d'énergie selon l'une quelconque des revendications 1 à 10, comprenant une pluralité de flotteurs, dans lequel ladite unité de commande est destinée à distribuer une pression hydraulique à partir d'une première pluralité de vérins hydrauliques, provoquée par la réception d'énergie cinétique provenant d'un flotteur connecté respectivement parmi une première pluralité de flotteurs en réponse à la propagation des vagues, à une deuxième pluralité de vérins hydrauliques qui actionnent chacun un mouvement d'un flotteur connecté respectivement parmi une deuxième pluralité de flotteurs à partir d'un mouvement collectif de ladite plate-forme fourni par ledit mouvement de ladite deuxième pluralité de flotteurs.

12. Système de conversion d'énergie selon l'une quelconque de revendications 1 à 11, dans lequel ladite plate-forme comprend une enceinte (121) avec un environnement contrôlé pour ledit système de conversion d'énergie.

13. Système de conversion d'énergie selon l'une quelconque des revendications 1 à 12, dans lequel ladite plate-forme comprend au moins une partie en forme de proue (122), et/ou dans lequel ladite plate-forme contient des moulins à vent (123, 124) qui sont connectés audit moteur hydraulique.

14. Procédé (500) d'extraction de puissance à partir des vagues dans un système de conversion d'énergie ayant des flotteurs qui transfèrent une énergie cinétique provenant de la propagation des vagues à un moteur hydraulique, ledit procédé comprenant les étapes consistant à,
recevoir (501) une quantité d'énergie cinétique provenant d'un premier flotteur qui est transférée à un premier vérin hydraulique associé, **caractérisé par** les étapes consistant à,
distribuer (502) une partie de ladite quantité d'énergie cinétique par le biais d'une pression hydraulique dudit première vérin hydraulique à au moins un deuxième vérin hydraulique qui actionne un mouvement d'un deuxième flotteur, de manière simultanée et opposée à un mouvement dudit premier flotteur, pour une accumulation momentanée d'énergie potentielle,
réguler une pression de vérin hydraulique fournie vers ou depuis lesdits vérins hydrauliques par des vannes de commande (114, 115, 116) avec une unité de commande, grâce à quoi une synchronisation du mouvement desdits flotteurs par rapport à ladite propagation des vagues est contrôlée.
